# EUROPÄISCHE PATENTSCHRIFT

(11) **EP 2 836 802 B1**
(45) Veröffentlichungstag und Bekanntmachung des Hinweises auf die Patenterteilung: **25.09.2019**
(21) Anmeldenummer: 13711024.3
(22) Anmeldetag: 19.03.2013
(51) Int. Cl.: G01F 23/296

(54) **FÜLLSTANDSMESSGERÄT**
FILL LEVEL MEASURING DEVICE
APPAREIL DE MESURE DU NIVEAU DE REMPLISSAGE

(30) Priorität: 12.04.2012 DE 102012103165
(43) Veröffentlichungstag der Anmeldung: 18.02.2015
(73) Patentinhaber: Endress+Hauser SE+Co. KG, 79689 Maulburg (DE)
(72) Erfinder: PFEIFFER, Helmut, 79585 Steinen (DE); MACK, Benjamin, 79540 Lörrach (DE)
(74) Vertreter: Andres, Angelika Maria
(86) Internationale Anmeldenummer: PCT/EP2013/055616
(87) Internationale Veröffentlichungsnummer: WO 2013/152926

(56) Entgegenhaltungen:
- EP-A1- 2 273 239
- US-A1- 2011 147 086

## Beschreibung

Die vorliegende Erfindung betrifft ein Füllstandsmessgerät mit einem Schwingsystem, welches mindestens ein äußeres rohrförmiges Schwingelement und ein inneres Schwingelement aufweist, wobei das äußere Schwingelement das innere Schwingelement zumindest abschnittsweise koaxial umgibt. Derartige Füllstandsmessgeräte sind auch unter der Bezeichnung Einstab bekannt. Das Füllstandsmessgerät dient der Erfassung eines Füllstands eines Mediums, insbesondere eines Schüttguts, in einem Behälter. Beispielsweise ist das Füllstandsmessgerät als Grenzstandschalter zur Überwachung eines vorbestimmten maximalen oder minimalen Füllstands einsetzbar.

Aus der Patentschrift DE 19651362 C1 ist ein Messgerät zur Füllstandsüberwachung mit einem Schwingsystem bekannt, welches aus zwei Schwingstäben besteht. Hierbei ist ein innerer Schwingstab koaxial von einem äußeren rohrförmigen Schwingstab umgeben. Beide Schwingstäbe sind jeweils über ein elastisches Halteteil an einem gemeinsamen Träger befestigt und werden zu gegensinnigen transversalen Schwingungen mit der Eigenresonanzfrequenz des Schwingsystems angeregt. Das Messgerät ist derart an einem Behälter montiert, dass der äußere Schwingstab mit dem Füllgut in Berührung gelangt, sobald dieses den zu überwachenden Füllstand erreicht. Als Messgröße zur Füllstandsdetektion dient die Schwingungsamplitude.

Um auch bei Ansatzbildung eine entkoppelte Schwingung zu gewährleisten weist der innere Schwingstab eine Kompensationsmasse auf, welche verschiebbar angeordnet ist, sodass die Resonanzfrequenz des inneren Schwingungsgebildes an die des äußeren Schwingungsgebildes anpassbar ist. Die Kompensationsmasse ist beispielsweise an einer axial verlaufenden Stange befestigt, welche ein Schraubengewinde aufweist. Ein Motor dreht die Stange derart, dass sich die Kompensationsmasse in axialer Richtung bewegt.

In der Offenlegungsschrift EP 2273239 A1 ist eine Füllstandsmessvorrichtung beschrieben, welche ebenfalls zwei ineinander angeordnete rohrförmige Schwingungskörper aufweist. Der äußere Schwingungskörper ist über einen elastischen Abschnitt an einer Befestigungseinrichtung befestigt. Im Inneren des inneren Schwingkörpers ist ein Abgleichkörper angeordnet. Der Abgleichkörper ist abschnittsweise elastisch ausgestaltet und unter Kompression in den inneren Schwingkörper eingebracht. Weiterhin weist der Abgleichkörper einen Abschnitt mit einem Außengewinde auf, welches auf ein Innengewinde in der Innenwandung des inneren Schwingkörpers abgestimmt ist. Zum Verstellen der Position des Abgleichkörpers ist stirnseitig ein Schlitz ausgebildet, in welchen ein Verstellinstrument, beispielsweise ein Schraubenzieher, eingreifen kann. Das Verstellen erfolgt manuell oder über eine Motorantriebsteuerung.

Ein manuelles Verstellen des Abgleichkörpers über das stabförmige Verstellinstrument ist unkomfortabel. Eine Motorsteuerung hingegen ist aufwendig in der Umsetzung. Weiterhin ist das beschriebene Schwingsystem auf Grund der Gewinde relativ aufwendig in der Herstellung.

Die Aufgabe der Erfindung besteht darin, ein Füllstandsmessgerät mit einem auf einfache Weise verstellbaren Abgleichkörper bereit zu stellen.

Die Aufgabe wird dadurch gelöst, dass in einem Innenraum des inneren Schwingelements eine in axialer Richtung verschiebbare Kompensationsvorrichtung mit zumindest einem ersten Arretierelement, einem zweiten Arretierelement und einem Kopplungselement angeordnet ist, wobei die Arretierelemente und das Kopplungselement aus einem piezoelektrischen Material bestehen, wobei das Kopplungselement das erste Arretierelement und das zweite Arretierelement miteinander verbindet, und wobei das erste Arretierelement und das zweite Arretierelement in einem Ruhezustand jeweils kraftschlüssig mit einer Wandung des Innenraums in Verbindung stehen, und dass das Füllstandsmessgerät eine Elektronikeinheit aufweist, welche dazu ausgestaltet ist, die Kompensationsvorrichtung mittels elektrischer Signale an einer vorgebbaren Position zu positionieren. Durch die Verschiebung der Kompensationsvorrichtung im inneren Schwingelement ist ein energetisches Ungleichgewicht kompensierbar, welches beispielsweise durch Ansatzbildung auf dem äußeren Schwingelement oder Korrosion entsteht.

In einer ersten Ausgestaltung ist an dem ersten Arretierelement und/oder dem zweiten Arretierelement eine Zusatzmasse befestigt.

In einer Ausgestaltung ist das innere Schwingelement zumindest abschnittsweise rohrförmig.

Gemäß einer Ausgestaltung ist die Kompensationsvorrichtung dazu ausgestaltet, sich in axialer Richtung nach dem Inchwormprinzip zu bewegen.

Eine Ausgestaltung beinhaltet, dass die Arretierelemente in radialer Richtung und das Kopplungselement in axialer Richtung polarisiert sind.

Gemäß einer Weiterbildung ist das Kopplungselement derart ausgestaltet, dass das Kopplungselement bei Beaufschlagung mit einer elektrischen Spannung eine Längenausdehnung in axialer Richtung erfährt.

Eine Ausgestaltung sieht vor, dass die Elektronikeinheit das erste Arretierungselement und das zweite Arretierungselement im Ruhezustand mit einer elektrischen Spannung beaufschlagt und dass die Elektronikeinheit zum Lösen der kraftschlüssigen Verbindung zwischen der Wandung und dem ersten Arretierungselement oder dem zweiten Arretierungselement die elektrische Spannung reduziert, mit welcher das erste Arretierungselement oder das zweite Arretierungselement im Ruhezustand beaufschlagt ist.

Gemäß einer Ausgestaltung ist eine Antriebs-/Empfangseinheit vorgesehen, welche das äußere Schwingelement und das Innere Schwingelement zu gegensinnigen mechanischen Schwingungen mit der Resonanzfrequenz anregt.

In einer Ausgestaltung ist die Elektronikeinheit dazu ausgestaltet, im Falle einer Veränderung der Frequenz der Schwingungen des Schwingsystems die Kompensationsvorrichtung zu verschieben.

Gemäß einer Weiterbildung ist die Elektronikeinheit dazu ausgestaltet, die Kompensationsvorrichtung derart zu positionieren, dass die Amplitude der Schwingungen des inneren Schwingelements maximal ist.

Das erfindungsgemäße Füllstandsmessgerät verfügt über einen automatisch positionierbaren Abgleichkörper in Form der Kompensationsvorrichtung. Bildet sich Ansatz am äußeren Schwingelement oder tritt Korrosion auf, entsteht ein Ungleichgewicht der Massenträgheitsmomente des inneren Schwingelements und des äußeren Schwingelements. Dies ist an einer Veränderung der Schwingfrequenz des Schwingsystems, sowie einer verminderten Schwingungsamplitude erkennbar. Die Kompensationsvorrichtung ist axial verschiebbar, sodass das Massenträgheitsmoment des inneren Schwingelements einstellbar und hierdurch das Schwingungsgleichgewicht wieder herstellbar ist. Die Kompensationsvorrichtung positioniert sich selbst an der hierfür erforderlichen Stelle in dem inneren Schwingelement. Hierzu benötigt sie lediglich ein entsprechendes Steuersignal, welches die Elektronikeinheit erzeugt. Die Elektronikeinheit berechnet entweder die erforderliche Position der Kompensationsvorrichtung und erzeugt das Steuersignal entsprechend, oder die Elektronikeinheit überwacht das Schwingungsgleichgewicht und erzeugt das Steuersignal derart, dass der Ruhezustand beibehalten wird, falls das Schwingsystem abgeglichen ist, und dass sich die Kompensationsvorrichtung in axialer Richtung verschiebt, falls dies nicht der Fall ist. Da die Bewegung der Kompensationsvorrichtung nach dem Inchwormprinzip erfolgt, findet die Verschiebung in Schritten um eine konstante Länge statt. Diese schrittweise Bewegung ist so oft zu wiederholen, bis die Position erreicht ist, an welcher die Massenträgheitsmomente von innerem und äußerem Schwingelement zumindest im Wesentlichen übereinstimmen. Dies ist beispielsweise daran zu erkennen, dass die Schwingungsamplitude des Schwingsystems, bzw. die Schwingungsamplituden von innerem und äußerem Schwingelement maximal sind. Mittels des Inchwormprinzips ist eine genaue Positionierung des Abgleichkörpers möglich, sodass die Füllstandsmessung auch bei veränderten Randbedingungen, insbesondere Ansatzbildung, mit hoher Genauigkeit durchführbar ist. Ein Eingreifen des Bedienpersonals zur manuellen Nachführung ist nicht erforderlich. Weiterhin funktioniert die Verschiebung der Kompensationsvorrichtung mit hoher Zuverlässigkeit ohne verschleißanfällig zu sein.

Die Erfindung wird anhand der nachfolgenden schematischen Figuren näher erläutert.
- Fig. 1: zeigt ein Füllstandsmessgerät mit einem Schwingsystem mit einem inneren und einem äußeren Schwingelement;
- Fig. 2a: zeigt die Kompensationsvorrichtung in dem inneren Schwingelement im Ruhezustand;
- Fig. 2b-d: zeigen jeweils eine Momentaufnahme der Kompensationsvorrichtung in dem inneren Schwingelement während der Verschiebung der Kompensationsvorrichtung.

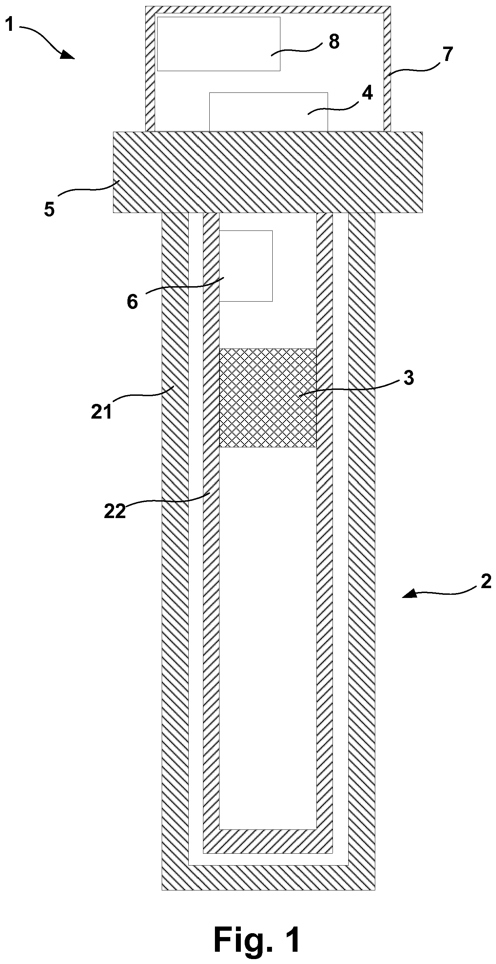

Fig. 1 offenbart eine schematische Ansicht eines vibronischen Füllstandsmessgeräts 1. Das Schwingsystem 2 besteht aus einem inneren Schwingelement 22 und einem äußeren Schwingelement 21, wobei das äußere Schwingelement 21 rohrförmig ausgestaltet ist und das innere Schwingelement 22 koaxial umgibt. Das innere Schwingelement 22 ist ebenfalls im Wesentlichen rohrförmig. Im Bereich des Prozessanschlusses 5 sind das äußere Schwingelement 21 und das innere Schwingelement 22 mechanisch miteinander gekoppelt. Eine Antriebs-/Empfangseinheit 4 regt das Schwingsystem 2 zu mechanischen Schwingungen an und empfängt ein die mechanischen Schwingungen des Schwingsystems 2 repräsentierendes Signal. Mittels des Prozessanschlusses 5 ist das Füllstandsmessgerät 1 derart in einer Wandung eines Behälters befestigbar, dass das Schwingsystem 2 in das Innere des Behälters hineinragt. Ein Feldgehäuse 7, welches unter anderem eine Steuer-/Auswerteeinheit 8, beispielsweise in Form eines Mikrocontrollers, zur Steuerung der Messung und Bestimmung des Füllstands beherbergt, verbleibt außerhalb des Behälters. Je nach Ausgestaltung des Schwingsystems 2 und der Antriebs-/Empfangseinheit 4 ist auch die Antriebs-/Empfangseinheit 4 in dem Feldgehäuse 7 angeordnet.

Die Antriebs-/Empfangseinheit 4 ist beispielsweise als piezoelektrische Wandlereinheit ausgestaltet. Derartige Wandlereinheiten sind aus dem Stand der Technik hinlänglich bekannt, sodass hier nur grob auf die Funktionsweise eingegangen wird. In einer Variante sind mehrere piezoelektrische Antriebselemente und piezoelektrische Empfangselemente in einem Stapel angeordnet, welcher unter Vorspannung zwischen einem Befestigungsmittel in dem Feldgehäuse 7 und einer Basis des Schwingsystems 2 eingebracht ist. In einer anderen Variante ist ein scheibenförmiges piezoelektrisches Element derart polarisiert und mit einer Elektrodenstruktur versehen, dass das Element sowohl als Antriebselement als auch als Empfangselement dient. Es sind auch Ausgestaltungen bekannt, in welchen das innere Schwingelement 22 in dem von dem Prozessanschluss 5 abgewandten Endbereich mit dem äußeren Schwingelement 21 verbunden ist und die Antriebs-/Empfangseinheit 4 in diesem prozesszugewandten Endbereich angeordnet ist. Allen Ausgestaltungen ist gemein, dass die Steuer-/Auswerteeinheit 8 die piezoelektrische Wandlereinheit mit einem elektrischen Anregungssignal beaufschlagt, welches zu einer Deformation der Antriebselemente führt. Die mechanischen Bewegungen des Schwingsystems 2 werden von der Wandlereinheit in ein elektrisches Empfangssignal umgewandelt, welches die Steuer-/Auswerteeinheit 8 zur Ermittlung des Füllstands auswertet.

Alternativ ist das Schwingsystem beispielsweise mittels eines magnetoelektrischen Antriebs zu Schwingungen anregbar, wobei die Empfangseinheit ebenfalls magnetoelektrisch oder piezoelektrisch ausgestaltet sein kann.

Zur Füllstandsmessung erzeugt die Steuer-/Auswerteeinheit 8 das Antriebssignal derart, dass die Antriebs-/Empfangseinheit 4 das Schwingsystem 2 zu resonanten Schwingungen anregt. Das äußere Schwingelement 21 und das innere Schwingelement 22 sind derart ausgestaltet, dass sie mit der gleichen Resonanzfrequenz schwingen. Das äußere Schwingelement 21 schwingt hierbei gegensinnig zu dem inneren Schwingelement 22. Hierdurch wird vermieden, dass Kräfte auf den Prozessanschluss 5 einwirken, was die Messung verfälschen könnte. Zur Füllstandsmessung wertet die Steuer-/Auswerteeinheit 8 die Amplitude des elektrischen Empfangssignals aus. Ist das äußere Schwingelement 21 mit dem zu detektierenden Medium bedeckt, werden die mechanischen Schwingungen gedämpft, was mit einer verringerten Amplitude einhergeht.

Bildet sich Ansatz an dem äußeren Schwingelement 21 oder tritt Korrosion auf, so ändert sich die Resonanzfrequenz des Schwingsystems 2. Weiterhin vermindert sich die Schwingungsamplitude, da die beiden Schwingelemente 21, 22 nicht mehr aufeinander abgestimmt sind. Um auch bei Ansatzbildung und Korrosion eine präzise Messung zu ermöglichen ist daher eine Kompensationsvorrichtung 3 in dem inneren Schwingelement 22 angeordnet, mittels welcher das Massenträgheitsmoment des inneren Schwingelements 22 derart einstellbar ist, dass das Schwingsystem 2 wieder abgeglichen ist. Vorzugsweise bestimmt die Elektronikeinheit 6 die Schwingungsamplitude des Schwingsystems 2 oder des inneren Schwingelements 22 und führt die Kompensationsvorrichtung 3 derart nach, dass sich ein Amplitudenmaximum einstellt. Die Verschiebung wird hierbei vorzugsweise durch eine Veränderung der Resonanzfrequenz getriggert. Um gleichermaßen auf eine verringerte und eine erhöhte Resonanzfrequenz reagieren zu können, bestimmt die Elektronikeinheit 6 die Richtung der Veränderung der Resonanzfrequenz und steuert die Richtung der Verschiebung der Kompensationsvorrichtung 3 dementsprechend. Bei Ansatzbildung verringert sich die Resonanzfrequenz des Schwingsystems 2, sodass eine Verschiebung der Kompensationsvorrichtung 3 vom Prozessanschluss 5 weg erforderlich ist. Bei Korrosion ist entsprechend eine Verschiebung in umgekehrter Richtung nötig. Die Kompensationsvorrichtung 3 stellt eine bewegliche Masse dar, deren Verschiebung in axialer Richtung auf Grund der Kopplung des inneren Schwingelements 22 und des äußeren Schwingelements 21 eine Veränderung der Resonanzfrequenz und Amplitude des Schwingsystems 2 bewirkt.

Kompensationsvorrichtungen in Form einer axial verschiebbaren Zusatzmasse sind aus dem Stand der Technik bekannt. Erfindungsgemäß ist die Kompensationsvorrichtung 3 nun derart ausgestaltet, dass sie mittels des Inchwormprinzips verschiebbar ist. Dies bietet den Vorteil, dass sich die Kompensationsvorrichtung 3 in Abhängigkeit elektrischer Steuersignale selbst neu positioniert. Ein manuelles Verschieben ist nicht erforderlich. Weiterhin kann auf einen Motor in dem Feldgehäuse 7 verzichtet werden, welcher für ein automatisches Betätigen einer Verschiebungsvorrichtung erforderlich wäre.

Die elektrischen Steuersignale für die Kompensationsvorrichtung 3 werden von der Elektronikeinheit 6 erzeugt. Die Elektronikeinheit 6 kann als Teil der Steuer-/Auswerteeinheit 8 oder als separate Einheit ausgestaltet sein. Beispielsweise ist die Elektronikeinheit 6 als Mikrocontroller ausgestaltet.

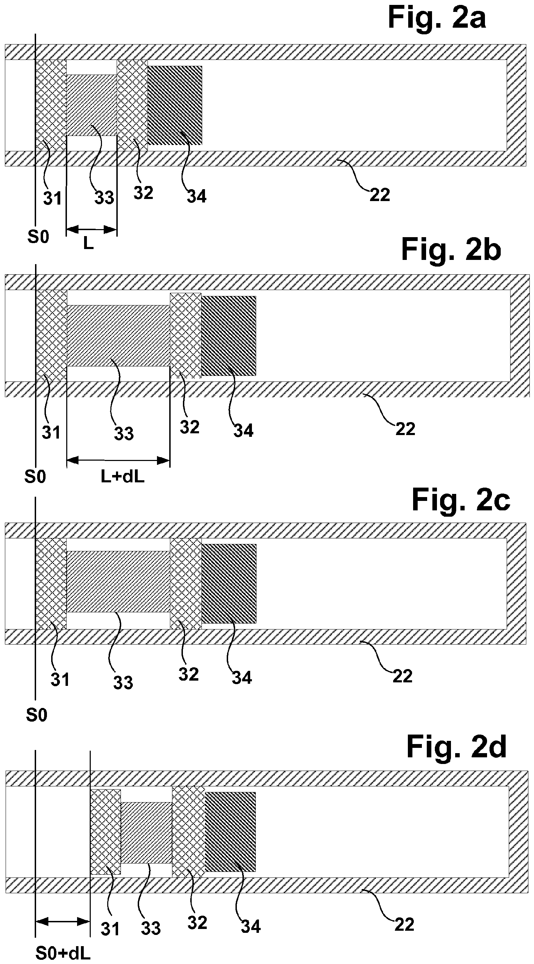

Zur Illustration einer konkreten Ausgestaltung der Kompensationsvorrichtung 3 und zur Erläuterung der Funktionsweise der axialen Verschiebung der Kompensationsvorrichtung 3 zeigen die Fig. 2 a-d das innere Schwingelement 21 mit der darin angeordneten Kompensationsvorrichtung 3 in vier Momentaufnahmen. Die Darstellung ist nicht maßstabgetreu; zur besseren Erkennbarkeit sind die sich ergebenden Längenänderungen übertrieben dargestellt.

Fig. 2a zeigt den Ruhezustand der Kompensationsvorrichtung 3. Im Ruhezustand befindet sich die Kompensationsvorrichtung 3 fest an einer bestimmten Position S0. In der Position S0 stimmen die Resonanzfrequenzen bzw. die Massenträgheitsmomente des inneren Schwingelements 22 und des äußeren Schwingelements 21 überein. Die Position S0 eines bei der Fertigung abgeglichenen Schwingsystems liegt beispielsweise vom Prozessanschluss 5 aus gesehen bei einem Viertel der Länge des inneren Schwingelements 22. Von dieser Ausgangsposition aus ist die Kompensationsvorrichtung 3 in axialer Richtung verschiebbar. Als Ruhezustand wird nicht nur die bei der Fertigung eingenommene Ausgangsposition S0 bezeichnet, sondern jeweils ein Zustand, in welchem das Schwingsystem abgeglichen ist, d.h. die Kompensationsvorrichtung 3 derart positioniert und kraftschlüssig mit dem inneren Schwingelement 22 verbunden ist, dass die Resonanzfrequenzen von äußerem Schwingelement 21 und innerem Schwingelement 22 übereinstimmen.

Die Kompensationsvorrichtung 3 weist ein erstes Arretierelement 31 und ein zweites Arretierelement 32 auf, welche über ein Kopplungselement 33 fest miteinander verbunden sind. An dem zweiten Arretierelement 32 ist eine Zusatzmasse 34 befestigt, deren Position das Massenträgheitsmoment und somit auch die Resonanzfrequenz und Schwingungsamplitude des inneren Schwingelements 22 beeinflusst. Material und Masse der Zusatzmasse 34 sind in Abhängigkeit der Ausgestaltung des Schwingsystems beliebig wählbar. Das System aus Arretierelementen 31, 32 und Kopplungselement 33 dient dem Transport der Zusatzmasse 34. In einer Ausgestaltung trägt die Zusatzmasse 34 den wesentlichen Anteil der Gesamtmasse der Kompensationsvorrichtung 3. In einer anderen Ausgestaltung ist keine Zusatzmasse 34 vorhanden. In diesem Fall bilden die Arretierungselemente 31, 32 und das Kopplungselement 33 die zusätzliche Masse zur Kompensation eines veränderten Massenträgheitsmoments des äußeren Schwingelements 21. Weiterhin sind Ausgestaltungen möglich, welche zwischen den genannten Extremfällen liegen.

Erstes Arretierelement 31 und zweites Arretierelement 32 sind scheibenförmig. Der Innendurchmesser des inneren Schwingelements 22 stimmt mit dem Durchmesser des ersten Arretierelements 31 und des zweiten Arretierelements 32 überein, sodass diese Elemente 31, 32 mechanischen Kontakt zur Innenwandung des inneren Schwingelements 22 besitzen. Insbesondere sind die beiden Arretierelemente 31, 32 kraftschlüssig mit der Innenwandung des inneren Schwingelements 22 verbunden. Der Durchmesser des Kopplungselements 33 ist geringer als der Durchmesser der Arretierungselemente 31, 32, sodass kein direkter mechanischer Kontakt zu dem inneren Schwingelement 22 besteht. Die Dicke, d.h. die Abmessung L in axialer Richtung, kann gleich, kleiner oder größer als die Dicke der Arretierungselemente 31, 32 sein. Vorzugsweise ist die Dicke des Kopplungselements 33 größer als die der Arretierelemente 31, 32. Beispielsweise beträgt die Dicke der Arretierelemente 31, 32 und des Kopplungselements 33 zwischen 1 und 10 Millimeter.

Die beiden Arretierelemente 31, 32, sowie das Kopplungselement 33, bestehen aus einem piezoelektrischen Material. Piezoelektrische Elemente verändern bei Anlegen einer elektrischen Spannung ihr Volumen, wobei eine Ausdehnung oder ein Schrumpfen vornehmlich in Polarisationsrichtung stattfindet. Während die beiden Arretierelemente 31, 32 in radialer Richtung polarisiert sind, weist das Kopplungselement 33 eine Polarisation in axialer Richtung auf. Die beiden kreisförmigen Seitenflächen der scheibenförmigen Arretierelemente 31, 32 sind jeweils mit einer Elektrode versehen, beispielsweise in Form einer Beschichtung, sodass eine elektrische Spannung an die Arretierelemente 31, 32 anlegbar ist. Auf Grund der Polarisation in radialer Richtung erfährt ein Arretierelement 31, 32 bei Beaufschlagung mit einer Spannung eine Längenänderung in radialer Richtung. Beispielsweise sind das erste Arretierelement 31 und das zweite Arretierelement 32 im Ruhezustand mit einer Spannung beaufschlagt, wodurch die beiden Arretierelemente 31, 32 in dem rohrförmigen inneren Schwingelement 22 fixiert sind.

Zur Wiederherstellung des Schwingungsgleichgewichts, welches sich durch eine Schwingung des Schwingsystems 2 mit einer maximalen Amplitude auszeichnet, ist die Position der Kompensationsvorrichtung 3 veränderbar. Hierbei erfolgt die Nachführung der Position iterativ jeweils um eine Strecke dL, bis die Schwingungsamplitude des inneren Schwingelements 22 einen maximalen Wert annimmt und das Energiegleichgewicht wieder hergestellt ist. In diesem Zustand ist auch die Schwingungsamplitude des gesamten Schwingsystems 2 maximal. Die Verschiebungsstrecke dL ist relativ gering und liegt üblicherweise im Bereich einiger Mikrometer. Um eine Verschiebung um eine größere Strecke im Millimeterbereich innerhalb kurzer Zeit zu erreichen ist eine entsprechend hohe Taktrate für die wiederholte Verschiebung um die Strecke dL erforderlich. Da sich Ansatz in der Regel langsam aufbaut, ist eine Nachführung mit geringerer Taktrate im Allgemeinen jedoch ausreichend. Vorzugsweise ist die Taktrate dynamisch veränderbar. Beispielsweise bestimmt die Elektronikeinheit 6 die erforderliche Verschiebung und wählt die Taktrate entsprechend der Streckenlänge.

In einer Ausgestaltung bestimmt die Steuer-/Auswerteeinheit 8 und/oder die Elektronikeinheit 6 eine auftretende Veränderung der Resonanzfrequenz quantitativ und ermittelt die zur Kompensation erforderliche Verschiebungsstrecke bzw. die erforderliche Position der Kompensationsvorrichtung 3. Hierzu wird die Differenz aus der aktuellen Resonanzfrequenz und der zuvor im abgeglichenen Zustand angenommenen Resonanzfrequenz bestimmt. Über die geforderte Gleichheit der Massenträgheitsmomente von äußerem Schwingelement 21 mit ggf. vorhandenem Ansatz und innerem Schwingelement 22 mit Kompensationsvorrichtung 3 ist hieraus die Position der Kompensationsvorrichtung 3 beziehungsweise die Strecke, um welche die Kompensationsvorrichtung 3 zu verschieben ist, bestimmbar.

In einer anderen Ausgestaltung misst ein Beschleunigungssensor Kräfte, welche im Fall eines unkompensierten Schwingsystems auftreten und die Elektronikeinheit 6 steuert die Verschiebung der Kompensationsvorrichtung 3 entsprechend derart, dass die auftretenden Kräfte minimal sind.

Ein erster Schritt zur Verschiebung der Kompensationsvorrichtung 3 ist in Fig. 2b gezeigt. Zum Lösen der mechanischen Verbindung des zweiten Arretierelements 32 mit der Innenwandung des inneren Schwingelements 22 reduziert die Elektronikeinheit 6 die an das zweite Arretierelement 32 angelegte Spannung, vorzugsweise auf Null. Hierdurch verringert sich der Durchmesser des zweiten Arretierelements 32, sodass kein Kontakt mehr zu der Innenwandung besteht. Weiterhin beaufschlagt die Elektronikeinheit 6 das Kopplungselement 33 mit einer Spannung. Das Kopplungselement 33 erfährt hierdurch eine Längenänderung in axialer Richtung um einen Betrag dL. Da das erste Arretierelement 31 an der Position S0 fixiert ist, erfahren das zweite Arretierungselement 32 und die Zusatzmasse durch die Längenänderung um dL eine Verschiebung in axialer Richtung um die Strecke dL.

In dem in Fig. 2c dargestellten nächsten Schritt wird die Spannungsbeaufschlagung des Kopplungselements 33 beibehalten während die Elektronikeinheit 6 das zweite Arretierungselement 32 erneut mit der Anfangsspannung beaufschlagt, sodass das zweite Arretierungselement 32 an der neuen Position kraftschlüssig mit dem inneren Schwingelement 22 verbunden ist.

Im letzten Schritt, welcher in Fig. 2d gezeigt ist, löst die Elektronikeinheit 6 die Verbindung des ersten Arretierelements 31 mit dem inneren Schwingelement 22, indem die Beaufschlagung mit der Spannung unterbrochen oder zumindest reduziert wird. Weiterhin beendet die Elektronikeinheit 6 die Beaufschlagung des Kopplungselements 33 mit der zuvor angelegten Spannung. Das Kopplungselement 33 nimmt hierdurch wieder seine ursprüngliche Länge L an. Durch die Fixierung des zweiten Arretierelements 32 an der Innenwandung zieht das Kopplungselement 33 das erste Arretierelement 31 nach, sodass nun auch das erste Arretierelement 31 an die Position S0+dL vorrückt.

Nachdem das erste Arretierungselement 31 erneut mit der Anfangsspannung beaufschlagt ist, befindet sich die Kompensationsvorrichtung 3 wieder im in der Fig. 2a dargestellten Ruhezustand, jedoch an der Stelle S0+dL. An den beschriebenen Zyklus schließt sich vorzugsweise unmittelbar der nächste von n Zyklen an, bis der Endzustand an der Position S0+ndL erreicht ist.

### Bezugszeichenliste

- 1: Messgerät
- 2: Schwingsystem
- 21: Äußeres Schwingelement
- 22: Inneres Schwingelement
- 3: Kompensationsvorrichtung
- 31: Erstes Arretierelement
- 32: Zweites Arretierelement
- 33: Kopplungselement
- 4: Antriebs-/Empfangseinheit
- 5: Prozessanschluss
- 6: Elektronikeinheit
- 7: Feldgehäuse
- 8: Steuer-/Auswerteeinheit

## Patentansprüche

1. Füllstandsmessgerät (1) mit einem zu mechanischen Schwingungen anregbaren Schwingsystem (2), welches mindestens ein äußeres rohrförmiges Schwingelement (21) und ein inneres Schwingelement (22) aufweist, wobei das äußere Schwingelement (21) das innere Schwingelement (22) zumindest abschnittsweise koaxial umgibt,
**dadurch gekennzeichnet,**
**dass** in einem Innenraum des inneren Schwingelements (22) eine in axialer Richtung verschiebbare Kompensationsvorrichtung (3) mit zumindest einem ersten Arretierelement (31), einem zweiten Arretierelement (32) und einem Kopplungselement (33) angeordnet ist, wobei die Arretierelemente (31, 32) und das Kopplungselement (33) aus einem piezoelektrischen Material bestehen, wobei das Kopplungselement (33) das erste Arretierelement (31) und das zweite Arretierelement (32) miteinander verbindet, und wobei das erste Arretierelement (31) und das zweite Arretierelement (32) in einem Ruhezustand jeweils kraftschlüssig mit einer Wandung des Innenraums in Verbindung stehen,
und
**dass** das Füllstandsmessgerät (1) eine Elektronikeinheit (6) aufweist, welche dazu ausgestaltet ist, die Kompensationsvorrichtung (3) mittels elektrischer Signale an einer vorgebbaren Position zu positionieren.

2. Füllstandsmessgerät nach Anspruch 1,
**dadurch gekennzeichnet,**
**dass** an dem ersten Arretierelement (31) und/oder dem zweiten Arretierelement (32) eine Zusatzmasse (34) befestigt ist.

3. Füllstandsmessgerät nach Anspruch 1 oder 2,
**dadurch gekennzeichnet,**
**dass** das innere Schwingelement (22) zumindest abschnittsweise rohrförmig ist.

4. Füllstandsmessgerät nach mindestens einem der vorangehenden Ansprüche,
**dadurch gekennzeichnet,**
**dass** die Kompensationsvorrichtung (3) dazu ausgestaltet ist, sich in axialer Richtung nach dem Inchwormprinzip zu bewegen.

5. Füllstandsmessgerät nach mindestens einem der vorangehenden Ansprüche,
**dadurch gekennzeichnet,**
**dass** die Arretierelemente (31, 32) in radialer Richtung und das Kopplungselement (33) in axialer Richtung polarisiert sind.

6. Füllstandsmessgerät nach mindestens einem der vorangehenden Ansprüche,
**dadurch gekennzeichnet,**
**dass** das Kopplungselement (33) derart ausgestaltet ist, dass das Kopplungselement (33) bei Beaufschlagung mit einer elektrischen Spannung eine Längenausdehnung in axialer Richtung erfährt.

7. Füllstandsmessgerät nach mindestens einem der vorangehenden Ansprüche,
**dadurch gekennzeichnet,**
**dass** die Elektronikeinheit (6) das erste Arretierungselement (31) und das zweite Arretierungselement (32) im Ruhezustand mit einer elektrischen Spannung beaufschlagt
und
**dass** die Elektronikeinheit (6) zum Lösen der kraftschlüssigen Verbindung zwischen der Wandung und dem ersten Arretierungselement (31) oder dem zweiten Arretierungselement (32) die elektrische Spannung reduziert, mit welcher das erste Arretierungselement (31) oder das zweite Arretierungselement (32) im Ruhezustand beaufschlagt ist.

8. Füllstandsmessgerät nach mindestens einem der vorangehenden Ansprüche,
**dadurch gekennzeichnet,**
**dass** eine Antriebs-/Empfangseinheit (4) vorgesehen ist, welche das äußere Schwingelement (21) und das Innere Schwingelement (22) zu gegensinnigen mechanischen Schwingungen mit der Resonanzfrequenz des Schwingsystems (2) anregt.

9. Füllstandsmessgerät nach mindestens einem der vorangehenden Ansprüche,
**dadurch gekennzeichnet,**
**dass** die Elektronikeinheit (6) dazu ausgestaltet ist, im Falle einer Veränderung der Frequenz der Schwingungen des Schwingsystems (2) die Kompensationsvorrichtung (3) zu verschieben.

10. Füllstandsmessgerät nach dem vorangehenden Anspruch,
**dadurch gekennzeichnet,**
**dass** die Elektronikeinheit (6) dazu ausgestaltet ist, die Kompensationsvorrichtung (3) derart zu positionieren, dass die Amplitude der Schwingungen des inneren Schwingelements (22) maximal ist.

## Claims

1. Level transmitter (1) with a vibration system (2) that can be excited to produce mechanical vibrations, wherein said system has at least an outer tubular vibration element (21) and an inner tubular vibration element (22), wherein the outer vibration element (21) at least partially surrounds the inner tubular vibration element (22) in a coaxial manner,
**characterized in that**
a compensation unit (3), which can be moved in the axial direction, is arranged in an interior area of the inner tubular vibration element (22) with at least a first locking element (31), a second locking element (32) and a coupling element (33), wherein the locking elements (31, 32) and the coupling element (33) are made from a piezoelectric material, wherein the coupling element (33) interconnects the first locking element (31) and the second locking element (32), and wherein the first locking element (31) and the second locking element (32) are each connected, in a rest position, with a wall of the interior area in a force-fit manner, and
**in that** the level transmitter (1) has an electronics unit (6) which is designed to position the compensation unit (3) at a predefinable position using electrical signals.

2. Level transmitter as claimed in Claim 1,
**characterized in that**
an additional mass (34) is fixed on the first locking element (31) and/or on the second locking element (32).

3. Level transmitter as claimed in Claim 1 or 2,
**characterized in that**
the inner tubular vibration element (22) is at least tubular in sections.

4. Level transmitter as claimed in at least one of the previous claims,
**characterized in that**
the compensation unit (3) is designed to move in the axial direction according to the inchworm principle.

5. Level transmitter as claimed in at least one of the previous claims,
**characterized in that**
the locking elements (31, 32) are polarized in the radial direction and the coupling element (33) is polarized in the axial direction.

6. Level transmitter as claimed in at least one of the previous claims,
**characterized in that**
the coupling element (33) is designed in such a way that the coupling element (33) experiences an elongation in the axial direction when subjected to an electrical voltage.

7. Level transmitter as claimed in at least one of the previous claims,
**characterized in that**
the electronics unit (6) supplies the first locking element (31) and the second locking element (32) with an electrical voltage in the resting state
and
**in that** the electronics unit (6) reduces the electrical voltage, which the first locking element (31) or the second locking element (32) is subjected to in the resting state, for the purpose of releasing the force-fit connection between the wall of the first locking element (31) or the second locking element (32).

8. Level transmitter as claimed in at least one of the previous claims,
**characterized in that**
a drive/reception unit (4) is provided which excites the outer vibration element (21) and the inner vibration element (22) to produce contrary mechanical vibrations at a resonance frequency of the vibration system (2).

9. Level transmitter as claimed in at least one of the previous claims,
**characterized in that**
the electronics unit (6) is designed to move the compensation unit (3) in the event of a change in the frequency of the vibrations of the vibration system (2).

10. Level transmitter as claimed in the previous claim,
**characterized in that**
the electronics unit (6) is designed to position the compensation unit (3) in such a way that the amplitude of the vibrations of the inner vibration element (22) is maximum.

## Revendications

1. Transmetteur de niveau (1) avec un système de vibration (2) pouvant être excité en vibrations mécaniques, lequel système comporte au moins un élément de vibration tubulaire extérieur (21) et un élément de vibration intérieur (22), l'élément de vibration extérieur (21) entourant au moins partiellement de manière coaxiale l'élément de vibration intérieur (22),
**caractérisé**
**en ce qu'**est disposé, dans un espace intérieur de l'élément de vibration intérieur (22), un dispositif de compensation (3) déplaçable en direction axiale, lequel dispositif présente au moins un élément d'arrêt (31), un deuxième élément d'arrêt (32) et un élément de couplage (33), les éléments d'arrêt (31, 32) et l'élément de couplage (33) étant constitués d'un matériau piézoélectrique, l'élément de couplage (33) reliant entre eux le premier élément d'arrêt (31) et le deuxième élément d'arrêt (32), et le premier élément d'arrêt (31) et le deuxième élément d'arrêt (32) étant chacun reliés, dans une position de repos, par une liaison de force avec une paroi de l'espace intérieur,
et
**en ce que** le transmetteur de niveau (1) comporte une unité électronique (6), laquelle est conçue de telle sorte à positionner le dispositif de compensation (3) sur une position prédéfinissable au moyen de signaux électriques.

2. Transmetteur de niveau selon la revendication 1,
**caractérisé**
**en ce qu'**est fixée, sur le premier élément d'arrêt (31) et/ou sur le deuxième élément d'arrêt (32), une masse supplémentaire (34).

3. Transmetteur de niveau selon la revendication 1 ou 2,
**caractérisé**
**en ce que** l'élément de vibration intérieur (22) est au moins partiellement tubulaire.

4. Transmetteur de niveau selon au moins l'une des revendications précédentes,
**caractérisé**
**en ce que** le dispositif de compensation (3) est conçu de telle sorte à se déplacer en direction axiale selon le principe de la chenille arpenteuse.

5. Transmetteur de niveau selon au moins l'une des revendications précédentes,
**caractérisé**
**en ce que** les éléments d'arrêt (31, 32) sont polarisés en direction radiale et l'élément de couplage (33) en direction axiale.

6. Transmetteur de niveau selon au moins l'une des revendications précédentes,
**caractérisé**
**en ce que** l'élément de couplage (33) est conçu de telle sorte que l'élément de couplage (33) subit, en cas d'alimentation avec une tension électrique, un allongement longitudinal en direction axiale.

7. Transmetteur de niveau selon au moins l'une des revendications précédentes,
**caractérisé**
**en ce que** l'unité électronique (6) alimente, à l'état de repos, le premier élément d'arrêt (31) et le deuxième élément d'arrêt (32) avec une tension électrique
et
**en ce que** l'unité électronique (6) réduit, en vue de la suppression de la liaison par force entre la paroi et le premier élément d'arrêt (31) ou le deuxième élément d'arrêt (32), la tension électrique avec laquelle le premier élément d'arrêt (31) ou le deuxième élément d'arrêt (32) sont alimentés à l'état de repos.

8. Transmetteur de niveau selon au moins l'une des revendications précédentes,
**caractérisé**
**en ce qu'**est prévue une unité d'entraînement / de réception (4), laquelle fait entrer l'élément de vibration extérieur (21) et l'élément de vibration intérieur (22) en vibrations mécaniques de sens contraire, à la fréquence de résonance du système de vibration (2).

9. Transmetteur de niveau selon au moins l'une des revendications précédentes,
**caractérisé**
**en ce que** l'unité électronique (6) est conçue de telle sorte à déplacer le dispositif de compensation (3) en cas de modification de la fréquence des vibrations du système de vibration (2).

10. Transmetteur de niveau selon la revendication précédente,
**caractérisé**
**en ce que** l'unité électronique (6) est conçue de telle sorte à positionner le dispositif de compensation (3) afin que l'amplitude des vibrations de l'élément de vibration intérieur (22) soit maximale.
